# EUROPEAN PATENT APPLICATION

(11) **EP 4 283 805 A2**
(43) Date of publication of application: **29.11.2023**
(21) Application number: 23174632.2
(22) Date of filing: 22.05.2023
(51) Int. Cl.: H02G 3/04, H02G 11/00, B62D 33/04, B62D 53/06, B60L 7/10, B60R 16/02

(54) **TRANSPORT REFRIGERATION ENERGY STORAGE SYSTEM**

(30) Priority: 23.05.2022 US 202263344903 P
(71) Applicant: Carrier Corporation, Palm Beach Gardens, FL 33418 (US)
(72) Inventor: SAROKA, Mary, Syracuse, 13221 (US); CORLEY, Travis, Syracuse, 13221 (US); KOSAKOWSKI, Chad, Syracuse, 13221 (US)
(74) Representative: Dehns

(57) **Abstract**

A cable management system for a transport refrigeration system includes a trailer comprising an energy storage device and at least one movable axle. The cable management system includes a plurality of track sections extending between the energy storage device and the movable axle and a plurality of fasteners coupling the plurality of track sections. At least one track section of the plurality of track sections is movable such that the plurality of track sections are transformable between a first configuration having a first axial length and a second configuration having a second axial length. The second axial length is shorter than the first axial length.

## Description

### BACKGROUND

Embodiments of the present disclosure relate to refrigeration systems, and more particularly, to an energy storage device of a transport refrigeration system.

Refrigerated trucks, trailers, and containers are commonly used to transport perishable cargo, such as, for example, produce, meat, poultry, fish, dairy products, cut flowers, pharmaceuticals and other fresh or frozen perishable products. Conventionally, transport refrigeration systems include a transport refrigeration unit having a refrigerant compressor, a condenser with one or more associated condenserfans, an expansion device, and an evaporator with one or more associated evaporator fans, which are connected via appropriate refrigerant lines in a closed loop refrigerant circuit. Air or an air/gas mixture is drawn from the interior volume of the cargo box by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo box.

The transport refrigeration industry is migrating away from the use of a diesel engine as a power source in favor of battery power. Some of these battery powered systems may include an axle or hub regenerative braking system integrated into a sliding tandem rear axle. Because the position of the rear axle is adjustable, the cabling extending between the battery power source and the regenerative braking system underneath the trailer may require management.

### BRIEF DESCRIPTION

According to an embodiment, a cable management system for a transport refrigeration system includes a trailer comprising an energy storage device and at least one movable axle. The cable management system includes a plurality of track sections extending between the energy storage device and the movable axle and a plurality of fasteners coupling the plurality of track sections. At least one track section of the plurality of track sections is movable such that the plurality of track sections are transformable between a first configuration having a first axial length and a second configuration having a second axial length. The second axial length is shorter than the first axial length.

In addition to one or more of the features described herein, or as an alternative, in further embodiments the at least one track section is rotatable relative to an adjacent track section.

In addition to one or more of the features described herein, or as an alternative, in further embodiments the at least one track section is rotatable vertically out of a plane defined by the plurality of track sections.

In addition to one or more of the features described herein, or as an alternative, in further embodiments each of the plurality of track sections has a base and at least one sidewall extending from the base, the plurality of track sections being mounted such that the base is oriented parallel to a bottom of the trailer.

In addition to one or more of the features described herein, or as an alternative, in further embodiments the at least one track section is rotatable laterally within a plane defined by the plurality of track sections.

In addition to one or more of the features described herein, or as an alternative, in further embodiments each of the plurality of track sections has a base and at least one sidewall extending from the base, the plurality of track sections being mounted such that the at least one sidewall is oriented parallel to a bottom of the trailer.

In addition to one or more of the features described herein, or as an alternative, in further embodiments a portion of adj acent track sections of the plurality of track sections are positioned in overlapping arrangement with one another to form an overlapping section, and a fastener of the plurality of fasteners is located at the overlapping section.

In addition to one or more of the features described herein, or as an alternative, in further embodiments comprising a locking mechanism configured to restrict movement of at least one of the plurality of track sections.

In addition to one or more of the features described herein, or as an alternative, in further embodiments the locking mechanism further comprises a locking pathway including at least one opening formed in the overlapping section of each track section and a locking pin receivable within the at least one opening.

In addition to one or more of the features described herein, or as an alternative, in further embodiments the plurality of track sections further comprises a forward track section positionable directly adjacent to the energy storage device, a rear track section positionable directly adjacent to the at least one movable axle, and a plurality of intermediate track sections coupling the forward track section and the rear track section, wherein the plurality of intermediate track sections are movable.

In addition to one or more of the features described herein, or as an alternative, in further embodiments the forward track section is fixedly mounted to at least one of the trailer and the energy storage device and the rear track section is fixedly mounted to at least one of the trailer and the at least one movable axle.

According to an embodiment, a transport refrigeration system includes a trailer having a cargo compartment and at least one axle. The at least one axle is movable relative to the trailer between a first position and a second position. A transport refrigeration unit is mounted to the trailer and is operable to condition an interior of the cargo compartment. The transport refrigeration unit includes at least one energy storage device, at least one component powered by electrical power from the at least one energy storage device, and a generator mounted at the at least one axle and operably connected to the at least one energy storage device via a cable. A cable management system extends between the at least one energy storage device and the at least one axle and supports the cable. An axial length of the cable management system is adjustable.

In addition to one or more of the features described herein, or as an alternative, in further embodiments the at least one energy storage device is fixedly mounted at a bottom of the trailer and a distance between the at least one axle and the at least one energy storage device is variable.

In addition to one or more of the features described herein, or as an alternative, in further embodiments the cable management system further comprises a plurality of track sections extending between the at least one energy storage device and the at least one axle and a plurality of fasteners coupling the plurality of track sections. At least one track section of the plurality of track sections is movable such that the plurality of track sections are transformable between a first configuration having a first axial length and a second configuration having a second axial length. The second axial length is shorter than the first axial length.

In addition to one or more of the features described herein, or as an alternative, in further embodiments the at least one track section is slidable relative to an adjacent track section.

In addition to one or more of the features described herein, or as an alternative, in further embodiments the at least one track section is rotatable relative to an adjacent track section.

In addition to one or more of the features described herein, or as an alternative, in further embodiments the at least one track section is rotatable vertically out of a plane defined by the plurality of track sections.

In addition to one or more of the features described herein, or as an alternative, in further embodiments each of the plurality of track sections has a base and at least one sidewall extending from the base, the plurality of track sections being mounted such that the base is oriented parallel to a bottom of the trailer.

In addition to one or more of the features described herein, or as an alternative, in further embodiments the at least one track section is rotatable laterally within a plane defined by the plurality of track sections.

In addition to one or more of the features described herein, or as an alternative, in further embodiments each of the plurality of track sections has a base and at least one sidewall extending from the base, the plurality of track sections being mounted such that the at least one sidewall is oriented parallel to a bottom of the trailer.

### BRIEF DESCRIPTION OF THE DRAWINGS

The following descriptions should not be considered limiting in any way. With reference to the accompanying drawings, like elements are numbered alike:
FIG. 1 is a perspective view of a transportation refrigeration system having an engineless transportation refrigeration unit according to an embodiment;
FIG. 2 is a side view of a transportation refrigeration system having an engineless transportation refrigeration unit according to an embodiment
FIG. 3 is a schematic of the engineless transportation refrigeration unit, according to an embodiment;
FIG. 4 is a schematic side view of a housing of an energy storage device according to an embodiment;
FIG. 5 is a bottom perspective view of an exemplary transport refrigeration system having a sliding rear axle in a rear position and a cable management system according to an embodiment;
FIG. 6 is a bottom perspective view of an exemplary transport refrigeration system having a sliding rear axle in a forward position and a cable management system according to an embodiment;
FIG. 7A is a plan view of an exemplary track section of a cable management system according to an embodiment;
FIG. 7B is a side view of the track section of FIG. 7A according to an embodiment;
FIG. 8 is a bottom perspective view of an exemplary transport refrigeration system having a sliding rear axle in a forward position and a cable management system according to another embodiment;
FIG. 9A is a perspective view of a track section of a cable management system according to an embodiment;
FIG. 9B is an end view of the track section of FIG. 9A according to an embodiment; and
FIG. 10 is an exemplary progression of movement of the cable management system as the sliding rear axle transitions towards a rear position according to an embodiment.

### DETAILED DESCRIPTION

A detailed description of one or more embodiments of the disclosed apparatus and method are presented herein by way of exemplification and not limitation with reference to the Figures.

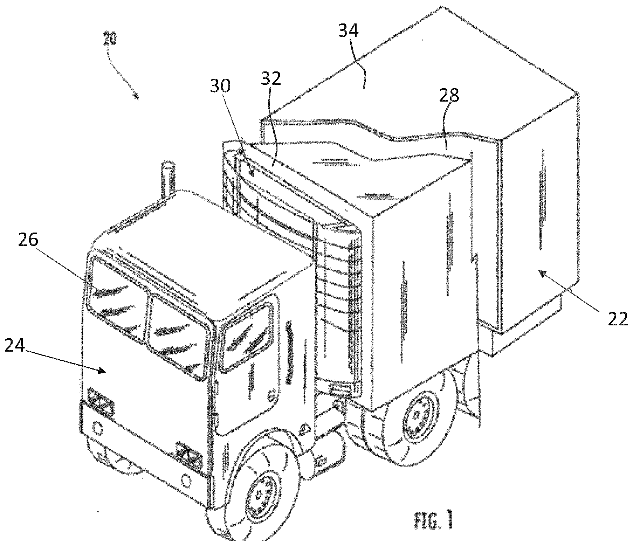

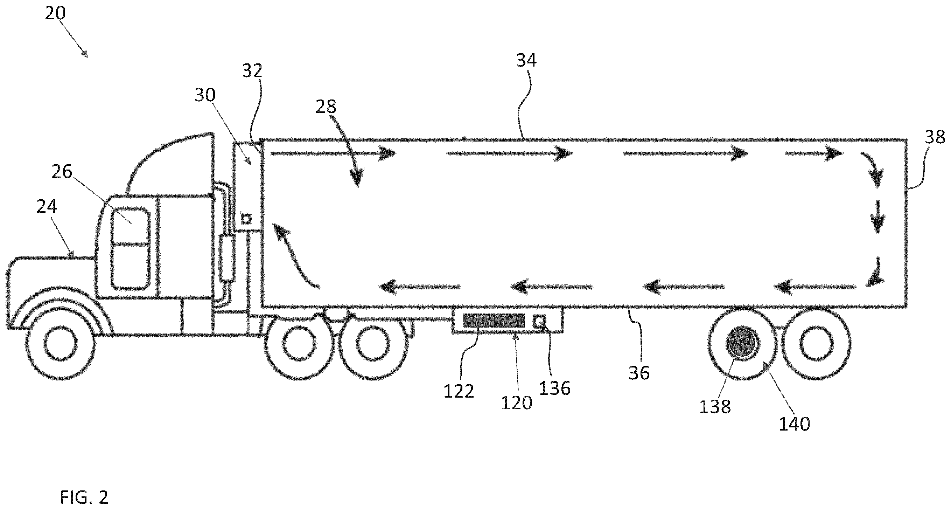

With reference now to FIGS. 1 and 2, an exemplary transport refrigeration system 20 is illustrated. In the illustrated, non-limiting embodiment, the transport refrigeration system 20 is shown as a trailer system. As shown, the transport refrigeration system 20 includes a cargo container 22 being towed or otherwise transported by a tractor 24 including an operator's compartment or cab 26 and also including an engine or other power source, such as an electric motor or fuel cell for example, which acts as the drivetrain system of the transport refrigeration system 20. The cargo container 22 and the tractor 24 may be permanently coupled, or in some embodiments, the cargo container 22 may be selectively disconnectable from the tractor 24, such as to park the cargo container 22 for example. In the illustrated, non-limiting embodiment, the cargo container 22 has wheels affixed thereto such that the cargo container 22 is configured as a trailer. However, in other embodiments, the cargo container 22 may be removably mountable to a framework having wheels, thereby allowing the cargo container 22 to be shipped via other modes of transport such as rail, air, boat, etc. In such embodiments, the cargo container 22 and the framework on which the cargo container is mounted, in combination, form the trailer.

A transport refrigeration unit (TRU) 30 is configured to maintain cargo located within an internal cargo compartment 28 of the cargo container 22 at a selected temperature and/or humidity by cooling the cargo compartment 28 using a refrigerated airflow. Although the internal cargo compartment 28 is illustrated as a single compartment 28 in FIG. 2, it should be understood that embodiments including a plurality of distinct internal cargo compartments having similar or different temperature and/or humidity conditions are also contemplated herein. In an embodiment, the TRU 30 is configured to provide desired environmental parameters, such as, for example temperature, pressure, humidity, carbon dioxide, ethylene, ozone, light exposure, vibration exposure, and other conditions to the cargo compartment 28. The TRU 30 is typically integrated into the cargo container 22 and may be mounted at the front wall 32 of the cargo container 22, as shown in FIGS. 1 and 2. Together, the TRU 30 and the cargo container 22 may form a transport refrigeration system 20.

Typically, transport refrigeration systems 20 are used to transport and distribute cargo, such as, for example perishable goods and environmentally sensitive goods (herein referred to as perishable goods). The perishable goods may include but are not limited to fruits, vegetables, grains, beans, nuts, eggs, dairy, seed, flowers, meat, poultry, fish, ice, blood, pharmaceuticals, or any other suitable cargo requiring cold chain transport. It should be appreciated by those of skill in the art that embodiments described herein may be applied to any transport refrigeration system such as, for example shipping containers that are shipped by rail, sea (via a watercraft), or any other suitable container, without use of a tractor 24.

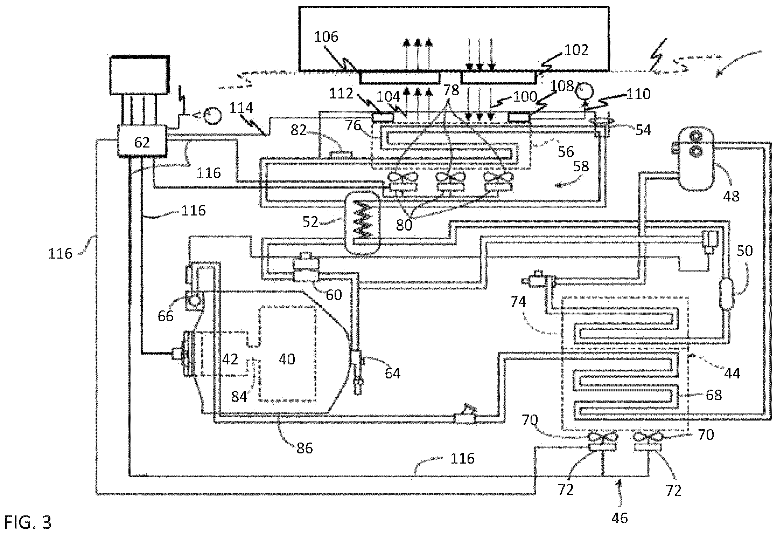

With reference to FIG. 3, an exemplary schematic diagram of the TRU is illustrated. As shown, the components of the TRU 30 may include a compressor 40, an electric compressor motor 42, a condenser 44 that may be air cooled, a condenser fan assembly 46, a receiver 48, a filter dryer 50, a heat exchanger 52, an expansion valve 54, an evaporator 56, an evaporator fan assembly 58, a suction modulation valve 60, and a controller 62 that may include a computer-based processor (e.g., microprocessor) and the like as will be described further herein. Operation of the TRU 30 may be understood by starting at the compressor 40, where the suction gas (e.g., natural refrigerant, hydro-fluorocarbon (HFC) R-404a, HFC R-134a... etc.) enters the compressor 40 at a suction port (not shown) and is compressed to a higher temperature and pressure. The refrigerant gas is emitted from the compressor 40 at an outlet port 66 and may then flow into tube(s) 68 of the condenser 44.

Air flowing across a plurality of condenser coil fins (not shown) and the tubes 68, cools the gas to its saturation temperature. The air flow across the condenser 44 may be facilitated by one or more fans 70 of the condenser fan assembly 46. The condenser fans 70 may be driven by respective condenser fan motors 72 of the condenser fan assembly 46 that may be electric. By removing latent heat, the refrigerant gas within the tubes 68 condenses to a high pressure and high temperature liquid and flows to the receiver 48 that provides storage for excess liquid refrigerant during low temperature operation. From the receiver 48, the liquid refrigerant may pass through a sub-cooler heat exchanger 74 of the condenser 44, through the filterdryer 50 that keeps the refrigerant clean and dry, then to the heat exchanger 52 that increases the refrigerant sub-cooling, and finally to the expansion valve 54.

As the liquid refrigerant passes through the orifices of the expansion valve 54, some of the liquid vaporizes into a gas (i.e., flash gas). Return air from the refrigerated space (i.e., cargo compartment 28) flows over the heat transfer surface of the evaporator 56. As the refrigerant flows through a plurality of tubes 76 of the evaporator 56, the remaining liquid refrigerant absorbs heat from the return air, and in so doing, is vaporized and thereby cools the return air.

The evaporator fan assembly 58 includes one or more evaporator fans 78 that may be driven by respective fan motors 80 that may be electric. The air flow across the evaporator 56 is facilitated by the evaporator fans 78. From the evaporator 56, the refrigerant, in vapor form, may then flow through the suction modulation valve 60, and back to the compressor 40. The expansion valve 54 may be thermostatic or electrically adjustable. In an embodiment, as depicted, the expansion valve 54 is thermostatic. A thermostatic expansion valve bulb sensor 82 may be located proximate to an outlet of the evaporator tube 76. In such embodiments, the bulb sensor 82 is intended to control the thermostatic expansion valve 54, thereby controlling refrigerant superheat at an outlet of the evaporator tube 76. In another embodiment, the expansion valve 54 could be an electronic expansion valve. In this case, the expansion valve 54 is commanded to a selected position by the controller 62 based on the operating conditions of the vapor compression cycle and the demands of the system.

It is further contemplated and understood that the above generally describes a single stage vapor compression system, although a two-stage vapor compression system, a scroll-type compressor or other compressors adapted to compress refrigerants (including, but not limited to, natural refrigerants such as CO₂, propane, ammonia, or any other natural refrigerant that may include a global-warming potential (GWP) of about one (1)) are within the scope of the disclosure.

A bypass valve (not shown) may facilitate the flash gas of the refrigerant to bypass the evaporator 56. This will allow the evaporator coil to be filled with liquid and completely 'wetted' to improve heat transfer efficiency. With CO₂ refrigerant, this bypass flash gas may be re-introduced into a mid-stage of a two-stage compressor 40.

The compressor 40 and the compressor motor 42 may be linked via an interconnecting drive shaft 84. The compressor 40, the compressor motor 42 and the drive shaft 84 may all be sealed within a common housing 86. As mentioned above, the compressor 40 may be a single-stage compressor, a two-stage compressor, a scroll-type compressor, or other type of compressor adapted to compress refrigerants.

With reference to FIG. 2, the airflow between the TRU 30 and the cargo compartment 28 is illustrated. Airflow is circulated into and through and out of the cargo compartment 28 of the cargo container 22 by means of the TRU 30. A return airflow 100 flows into the TRU 30 from the cargo compartment 28 through a return air intake 102, and across the evaporator 56 via the fan 78, thus conditioning the return airflow 100 to a selected or predetermined temperature. The conditioned return airflow 100, now referred to as supply airflow 104, is supplied into the cargo compartment 28 of the cargo container 22 through the refrigeration unit outlet 106, which in some embodiments is located near the top wall 34 of the cargo container 22. The supply airflow 104 cools the perishable goods in the cargo compartment 28. It is to be appreciated that the TRU 30 may further be operated in reverse to warm the cargo compartment 28 when, for example, the outside temperature is very low.

A temperature sensor 108 (i.e., thermistor, thermocouples, RTD, and the like) is placed in the air stream, on the evaporator 56, at the return air intake 102, and the like, to monitor the temperature return airflow 100 from the cargo compartment 28. A sensor signal indicative of the return airflow temperature denoted RAT is operably connected via line 110 to the TRU controller 62 to facilitate control and operation of the TRU 30. Likewise, a temperature sensor 112 is placed in the supply airflow 104, on the evaporator 56, at the refrigeration unit outlet 106 to monitor the temperature of the supply airflow 104 directed into the cargo compartment 28. Likewise, a sensor signal indicative of the supply airflow temperature denoted SAT is operably connected via line 114 to the TRU controller 62 to facilitate control and operation of the TRU 30. It should be understood that the configuration and operation of the TRU 30 as illustrated and described herein is intended as an example only.

With continued reference to FIGS. 2 and 3, the transport refrigeration system 20 may include an energy storage system 120 operably coupled to the TRU 30 and including at least one energy storage device 122. The energy storage device 122 may be separate and distinct from the power source of the tractor 24. Examples of a suitable energy storage device 122 includes, but are not limited to a battery system (e.g., a battery or bank of batteries), fuel cells, flow battery, and/or other devices capable of storing and outputting electric energy. The energy storage device 122 may output energy in the form of direct current (DC). Further, the energy storage device 122 may be considered a high voltage (HV) power source, having a voltage potential within a range of about two-hundred volts (200V) to about eight-hundred volts (800V). However, embodiments where the energy storage device 122 is configured to output energy in the form of alternating current (AC) and/or where the energy storage device 122 has a voltage potential less than 200V is also contemplated herein.

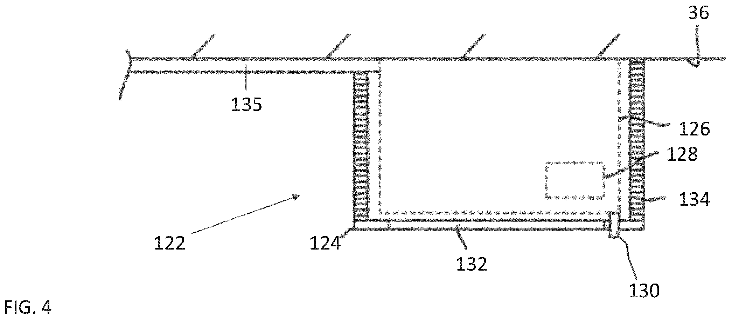

In the illustrated, non-limiting embodiment, the energy storage device 122 is mounted at an exterior of the cargo container 22, such as at the bottom surface 36, underneath the cargo compartment 28 for example. In such embodiments, the energy storage device 122 is designed to withstand vibration and shock seen in transport environments, such as during transport of the cargo container 22. An exemplary energy storage device is shown in FIG. 4. The energy storage device 122 may include a housing 124 containing one or more batteries 126, such as a rechargeable battery for example, and an energy storage device controller 128. In an embodiment, the housing 124 may additionally include an external power input 130 by which current from an external source can be provided to the battery 126 for charging and recharging purposes. The housing 124 is configured to protect the energy storage device 122 from environmental conditions, such as road debris, moisture, and corrosion, and may include an access panel 132 by which a service technician can access the energy storage device 122 for servicing or replacement. Alternatively, or in addition, the housing 124 may include one or more vents 134 for defining a coolant pathway along which airflow can be directed to cool the battery 126.

The energy storage system 120 may be configured to selectively communicate with the controller and the energy storage device 122 may be configured to selectively power one or more components of the TRU 30, such as the compressor motor 42, the condenser fan motors 72, the evaporator fan motors 80, the controller 62, and other components of the TRU 30 that may include various solenoids and/or sensors. In such embodiments, communication and/or power wiring 135 (FIG. 4) may extend between and operably couple the TRU 30 and the energy storage system 120. In such embodiments, the wiring 135 will be sized, insulated, and protected to communicate data with little or no interference or to conduct electrical power in various environmental conditions to which the TRU 30 is exposed.

In embodiments where the components of the TRU 30 are configured to receive AC power, the energy storage system 120 may additionally include an AC/DC converter 136. The AC/DC converter 136 may be mounted at the same location as the energy storage device 122, or alternatively, may be mounted elsewhere, such as in close proximity to the TRU 30 or the controller 62. The controller 62 through a series of data and command signals over various pathways 116 may, for example, control the application of power from the energy storage device 122 to the electric motors 42, 72, 80 as dictated by the cooling needs of the TRU 30.

A generator 138 may be operably coupled to the energy storage system 120, and more specifically to the energy storage device 122. In an embodiment, the generator 138 includes at least one of an axle generator and a hub generator as described in U.S. patent application Serial No. 15/734,165 filed September 13, 2019, the contents of which are incorporated herein by reference in their entirety. The generator 138 is mountably configured to recover rotational energy when the transport refrigeration system 20 is in motion and convert that rotational energy to electrical energy, such as, for example, when an axle of the trailer is rotating due to acceleration, cruising, or braking. The axle generator may be mounted on a wheel axle and the hub generator may be mounted on a wheel of the vehicle. In the illustrated, non-limiting embodiment, such a generator 138 is mounted at one or more axle or wheel of the cargo container 22, such as at the rear wheels/axle 140 of the cargo container 22. The generator 138 may be DC, providing a first DC power including a DC voltage and DC current, or alternatively, may produce AC power thereby providing AC voltage and AC current. In an embodiment, the generator 138 may be connected to and configured to deliver energy to the energy storage device 122 via one or more cables or wires 142 coupled to the external powerinput 130.

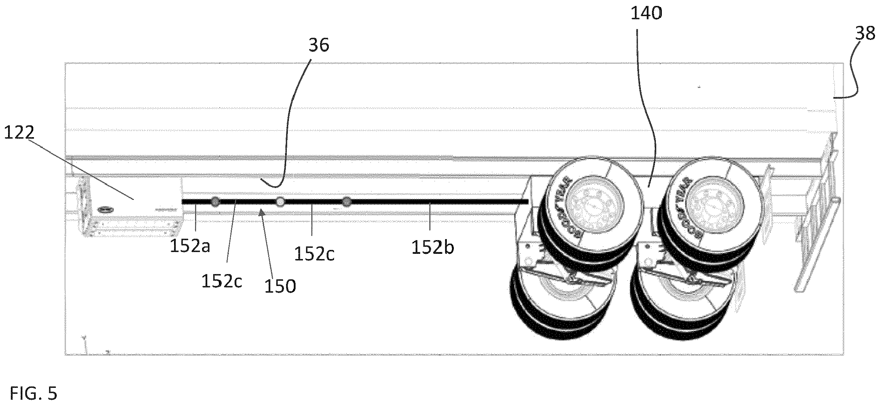

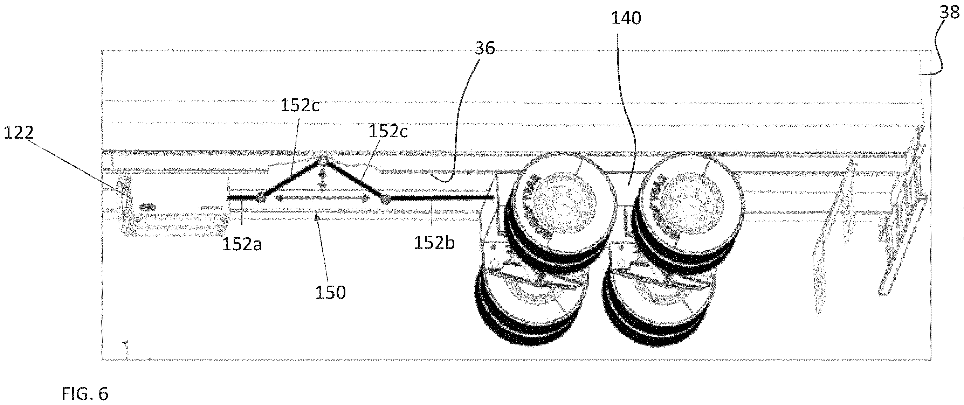

With reference now to FIGS. 5-10, in an embodiment, a position of the at least one rear axle 140 of the trailer, such as the tandem rear axle/hub system shown in FIGS. 2, 5, 6 and 8 is adjustable between a first, rear position (FIG. 5) and a second, forward position (FIG. 6) relative to the axial length of the trailer. In the first, rear position, the rear axle 140 may be arranged near or directly adjacent to the rear 38 of the cargo container 22. The position of the rear axle 140 may be selected based on at least one of the weight and the position of the cargo within the cargo compartment 28. As a result of this movement of the rear axle 140, the length of the one or more wires or cables 142 extending between the energy storage device 122 and the generator 138 is at least equal to the distance between the energy storage device 122 and the generator 138 when the rear axle 140 is in the first position. However, when the rear axle 140 is moved forward towards the tractor 24, to any position between the first position and the second position, the resulting distance between the energy storage device 122 and the generator 138 is less than the axial length of the at least one cable 142.

In an embodiment, to avoid damage to the excess length of cable 142 when the rear axle 140 is at a position other than the first position, the cargo container 22 includes a cable management system 150 configured to restrict movement of the at least one cable 142 in one or more directions relative to the cargo container 22. In the illustrated, non-limiting embodiment, the cable management system 150 includes a plurality of track sections 152 arranged over the axial length of the of the cable 142. As shown, when the rear axle 140 is in the first, rearmost position, the plurality of track sections 152 are substantially axially aligned and extend from a position generally adjacent to the energy storage device 122 to a position generally adjacent to the rear axle 140. The plurality of track sections 152 may include a forward track section 152a arranged at a first end of the plurality of track sections, a rear track section 152b arranged at a second end of the plurality of track sections, and at least one intermediate track section 152c positioned between the forward track section 152a and the rear track section 152b.

In an embodiment, the forward track section 152a is fixedly coupled to a surface, such as the bottom surface 36 for example, of the cargo container 22 and/or to a surface of the energy storage device 122 and the rear track section 152b is fixedly coupled to a surface of the cargo container 22 and/or to a surface of the rear axle 140. In other embodiments, at least one of the forward track section 152a and the rear track section 152b is movably mounted, such as pivotably mounted for example, to the cargo container 22 or to the energy storage device 122 or rear axle 140, respectively. In the illustrated, non-limiting embodiment, the cable management system 150 includes a plurality of intermediate track sections, such as two intermediate track sections 152c; however, it should be understood that a cable management system 150 having any suitable number of intermediate track sections 152c, such as three, four, five, six, or more than six track sections is within the scope of the disclosure.

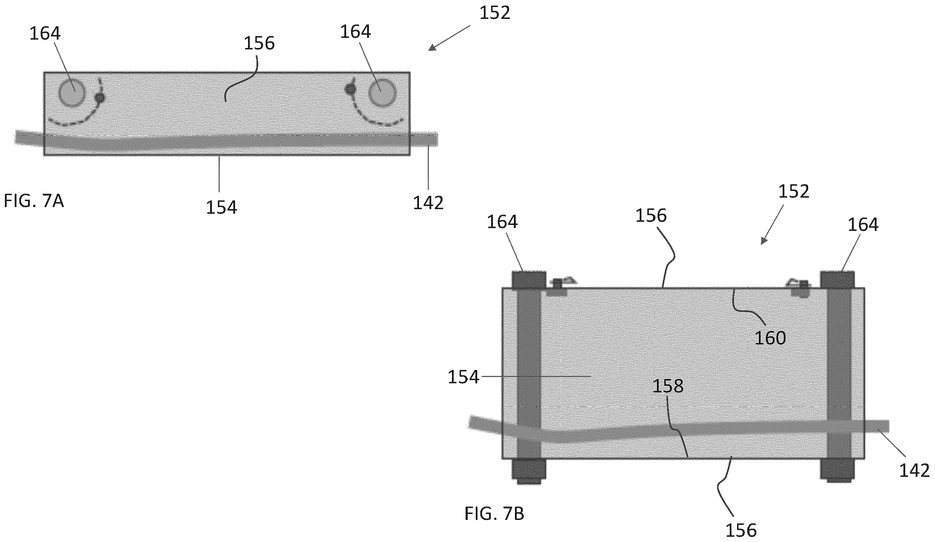

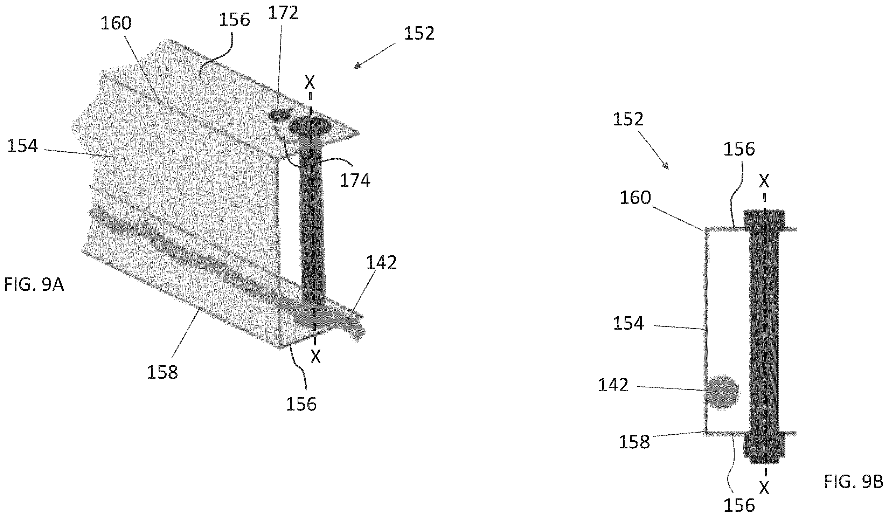

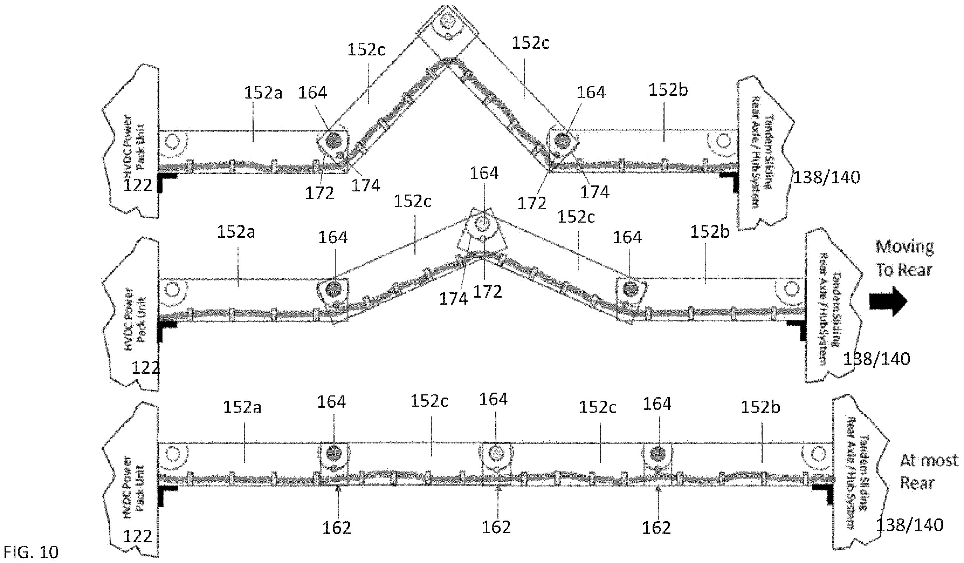

Although the track sections 152 are shown in FIG. 10 as being substantially identical, embodiments where one or more of the track sections 152 has a different configuration from the remainder of the track sections 152 are also contemplated herein (see FIGS. 5, 6, and 8). For example, in an embodiment, the length of the track sections 152 measured parallel to the length of the cargo container 22 may be the same, or may vary. In the illustrated, non-limiting embodiments shown in FIGS. 7A, 7B, 9A and 9B, an exemplary track section 152 has a base 154 and two sidewalls 156 extending from opposite ends 158, 160 of the base 154 in the same direction to form a U or C-shaped configuration. The track sections 152 may be formed from any suitable weather-resistant material, such as aluminum or painted steel for example. However, it should be understood that a track section 152 having a base 154 and at least one sidewall 156 is contemplated herein.

The plurality of track sections 152 are coupled to the adjacent track sections 152 by a plurality of fasteners 164. As shown, a portion of adjacent track sections 152 is configured to axially overlap one another and a connection between the overlapped track sections 152 is formed at this overlap section 162. In an embodiment, at least one of the plurality of track sections 152, such as at least one intermediate track section 152c is movably coupled to the surrounding track sections 152, such as via the connection at the overlap section 162. In the illustrated, non-limiting embodiment, a fastener 164, such as a pin, rod, or other suitable connector extends through aligned openings formed in the opposing sidewalls 156 at the overlap section 162. In such embodiments, the fastener 164 defines an axis of rotation X about which at least one of the coupled track sections 152 may move relative to the other.

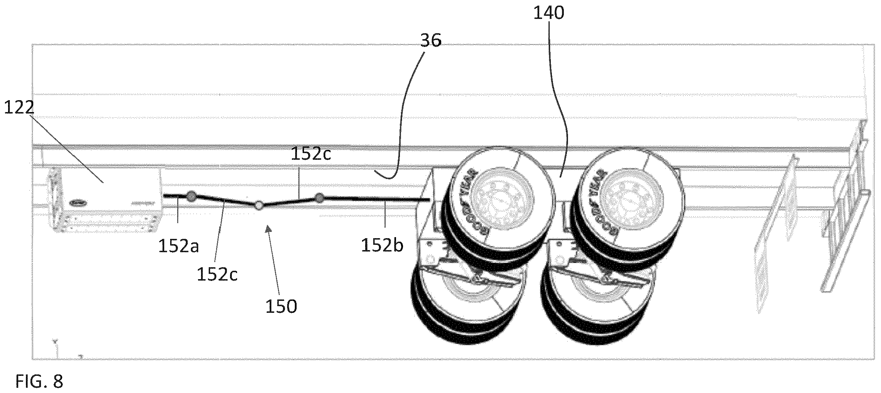

In an embodiment, shown in FIG. 7A and 7B, the track sections 152 are mounted in the U-shaped configuration with the base 154 arranged substantially parallel to the bottom 36 of the cargo container 22. In the U-shape configuration, the at least one cable 142 is generally supported by the base 154 of the track sections 152 and lateral movement is restricted by the sidewalls 156 of the track sections 152. In such embodiments, the fasteners 164 are arranged vertically above the cable 142 and one or more of the intermediate track sections 152c is operable to move out of the plane of the track sections 152, such as vertically towards or away from the bottom surface 36 of the cargo container 22 for example (see FIG. 6). In another embodiment, the track sections 152 are mounted in the C-shaped configuration (see FIGS. 8, 9A, and 9B) with the base 154 arranged substantially perpendicular to the bottom 36 of the cargo container 22 and one of the sidewalls 156 arranged generally parallel to the bottom 36 of the cargo container 22. In this C-shape configuration, the at least one cable 142 is generally supported by one of the sidewalls 156 of the track sections 152 and lateral movement of the at least one cable 142 is restricted by the base 154 and the fasteners 164. In such embodiments, the one or more of the intermediate track sections 152c are operable to move within the plane of the track sections 152, such as laterally towards a side of the cargo container 22 for example.

As the rear axle 140 is moved, for example translated, relative to the cargo container 22 from the first position in which the cable 142 is generally taut or has a tension acting thereon, the tension is removed from the cable. As the rear axle 140 slides, the plurality of track sections 152 are configured to transform from a first linear configuration to a second configuration. Specifically, one or more intermediate track sections 152c will pivot about a respective axis X from an elongated or axial position to a bent position. The amount that the at least one intermediate track section 152c rotates will depend on the position of the rear axle. For example, the relative rotation of the intermediate track sections 152c will increase as the rear axle 140 approaches the second position. However, in other embodiments, the intermediate track sections 152 may be configured to rotate sequentially or in series. For example, the relative rotation of a second intermediate track section 152c may only be initiated once a first intermediate track section 152c has been fully rotated. The second axial length of the plurality of track sections 152 in the second bent configuration is shorter than the first axial length of the plurality of track sections in the first, linear configuration.

The cable management system 150 may additionally include one or more locking mechanisms configured to lock or restrict movement of the one or more of the track sections 152 once the rear axle 140 is in its desired position. In the illustrated, non-limiting embodiment, the locking mechanisms includes a locking pin 172, such as arranged within the overlap section adjacent the fastener 164. A locking pathway 174 including at least one opening, such as a continuous opening or a plurality of separated openings for example, may be defined about at least a portion of the outer periphery of the fastener 164. In embodiments including distinct openings, the locking pin 172 is inserted through the aligned openings of the overlapped track sections 152 to restrict relative movement therebetween. In embodiments where the locking pathway 174 includes a continuous opening, the locking pin 172 may be configured to clamp the overlapped track sections 152 to restrict relative movement therebetween. In such embodiments, the locking pins 172 must be removed prior to movement of the rear axle 140 and reinstalled after the rear axle reaches its desired position. It should be understood that the locking mechanism illustrated and described herein is intended as an example only and that any suitable locking mechanism is within the scope of the disclosure. Such other locking mechanisms include, but are not limited to pneumatic, hydraulic, and electromechanical locking mechanisms, such as a solenoid for example.

A cable management system 150 for use on a TRU 30 as illustrated and described herein manages the cable 142 as the sliding rear axle 140 moves towards or away from the energy storage device 122. The cable management system 150 additionally ensures that the cable 142 remains properly routed and secured and provides rigid protection thereto.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A cable management system for a transport refrigeration system including a trailer comprising an energy storage device and at least one movable axle, the cable management system comprising:
a plurality of track sections extending between the energy storage device and the movable axle; and
a plurality of fasteners coupling the plurality of track sections;
wherein at least one track section of the plurality of track sections is movable such that the plurality of track sections are transformable between a first configuration having a first axial length and a second configuration having a second axial length, the second axial length being shorter than the first axial length.

2. The cable management system of claim 1, wherein the at least one track section is rotatable relative to an adjacent track section.

3. The cable management system of claim 2, wherein the at least one track section is rotatable vertically out of a plane defined by the plurality of track sections; and, optionally, wherein each of the plurality of track sections has a base and at least one sidewall extending from the base, the plurality of track sections being mounted such that the base is oriented parallel to a bottom of the trailer.

4. The cable management system of claim 2, wherein the at least one track section is rotatable laterally within a plane defined by the plurality of track sections; and, optionally, wherein each of the plurality of track sections has a base and at least one sidewall extending from the base, the plurality of track sections being mounted such that the at least one sidewall is orientedparallel to a bottom of the trailer.

5. The cable management system of claim 1, wherein a portion of adjacent track sections of the plurality of track sections are positioned in overlapping arrangement with one another to form an overlapping section, and a fastener of the plurality of fasteners is located at the overlapping section; and, optionally, further comprising a lockingmechanism configured to restrict movement of at least one of the plurality of track sections; and, optionally, wherein the locking mechanism further comprises:
a locking pathway including at least one opening formed in the overlapping section of each track section; and
a locking pin receivable within the at least one opening.

6. The cable management system of claim 1, wherein the plurality of track sections further comprises:
a forward track section positionable directly adjacent to the energy storage device;
a rear track section positionable directly adjacent to the at least one movable axle; and
a plurality of intermediate track sections coupling the forward track section and the rear track section, wherein the plurality of intermediate track sections are movable; and, optionally, wherein the forward track section is fixedly mounted to at least one of the trailer and the energy storage deviceand the rear track section is fixedly mounted to at least one of the trailer and the at least one movable axle.

7. A transport refrigeration system comprising:
a trailer including a cargo compartment and at least one axle, the at least one axle being movable relative to the trailer between a first position and a second position;
a transport refrigeration unit mounted to the trailer, the transport refrigeration unit being operable to condition an interior of the cargo compartment, the transport refrigeration unit comprising:
at least one energy storage device;
at least one component powered by electrical power from the at least one energy storage device; and
a generator mounted at the at least one axle and operably connected to the at least one energy storage device via a cable; and
a cable management system extending between the at least one energy storage device and the at least one axle, the cable being supported by the cable management system, wherein an axial length of the cable management system is adjustable.

8. The transport refrigeration system of claim 12, wherein the at least one energy storage device is fixedly mounted at a bottom of the trailer and a distance between the at least one axle and the at least one energy storage device is variable.

9. The transport refrigeration system of claim 12, wherein the cable management system further comprises:
a plurality of track sections extending between the at least one energy storage device and the at least one axle; and
a plurality of fasteners coupling the plurality of track sections;
wherein at least one track section of the plurality of track sections is movable such that the plurality of track sections are transformable between a first configuration having a first axial length and a second configuration having a second axial length, the second axial length being shorter than the first axial length.

10. The transport refrigeration system of claim 14, wherein the at least one track section is slidable relative to an adj acent track section.

11. The transport refrigeration system of claim 14, wherein the at least one track section is rotatable relative to an adjacent track section.

12. The transport refrigeration system of claim 16, wherein the at least one track section is rotatable vertically out of a plane defined by the plurality of track sections.

13. The transport refrigeration system of claim 17, wherein each of the plurality of track sections has a base and at least one sidewall extending from the base, the plurality of track sections being mounted such that the base is oriented parallel to a bottom of the trailer.

14. The transport refrigeration system of claim 16, wherein the at least one track section is rotatable laterally within a plane defined by the plurality of track sections.

15. The transport refrigeration system of claim 19, wherein each of the plurality of track sections has a base and at least one sidewall extending from the base, the plurality of track sections being mounted such that the at least one sidewall is oriented parallel to a bottom of the trailer.
